# EUROPEAN PATENT APPLICATION

(11) **EP 4 795 939 A1**
(43) Date of publication of application: **26.08.2026**
(21) Application number: 25159024.6
(22) Date of filing: 20.02.2025
(51) Int. Cl.: A23G 9/32, A23G 9/38, A23G 9/42, A23L 27/00, A23L 29/206

(54) **PLANT-BASED FROZEN CONFECTION WITH REDUCED OFF-FLAVOUR**

(71) Applicant: MAGNUM IP HOLDINGS B.V., 1017 BM Amsterdam (NL)
(72) Inventor: The designation of the inventor has not yet been filed
(74) Representative: Potter Clarkson

(57) **Abstract**

The present invention relates to a plant-based frozen confection comprising: fat in an amount of 1 to 15 wt.%; sugars in an amount of 10 to 30 wt.%; and plant protein in an amount of 0.4 to 10 wt.%; wherein the frozen confection comprises 2-pentyl-1,3-thiazolidine-4-carboxylic acid and/or salts thereof. The invention also relates to a method of producing a plant-based frozen confection with reduced off-flavour, said method comprising adding at least 0.001 wt.%, calculated by weight of the frozen confection, of an aldehyde scavenger, said aldehyde scavenger containing at least 5 wt.%, calculated by weight of the aldehyde scavenger, of cysteine.

## Description

### Field of the Invention

The present invention relates to a method of reducing off-flavour in a plant-based frozen confection, said method comprising addition of cysteine. Also disclosed is a plant-based frozen confection having a reduced off-flavour that can be obtained by such a method.

### Background of the Invention

Plant-based foods are a growing consumer trend, which is thought to be driven by increasing health and environmental consciousness. As a result, there is currently an increased consumer demand for frozen confections which are not based on dairy ingredients, and instead use plant-based alternatives.

Frozen confections where some or all of the dairy ingredients have been replaced with plant-based ingredients are commercially available. For instance, pulse protein (such as soy protein or pea protein) is becoming more widely used in frozen confections.

However, the flavour of frozen confections formulated with certain plant proteins is still unappealing to some consumers. In particular, their widespread acceptance is hindered by issues around their taste, since plant proteins tend to have an inherent taste that formulators must mask in order to create a neutral product base. For example, pulse proteins tend to have "beany" off-notes. This off-flavour is associated with the presence of aldehydes, such as hexanal.

Therefore, there remains a need to overcome the drawbacks associated with the current formulations. In particular, it would be advantageous to mitigate the off-flavour of plant proteins in order to provide frozen confections which are more appealing to consumers. The inventors of the present invention have discovered that the off-flavour note in plant-based frozen confections that is caused by the presence of aldehydes, such as hexanal, can be reduced by adding cysteine during the production of these frozen confections.

### Summary of the Invention

Accordingly, a first aspect of the present invention relates to a method of producing a plant-based frozen confection with reduced off-flavour, said method comprising adding at least 0.001 wt.%, calculated by weight of the frozen confection, of an aldehyde scavenger, said aldehyde scavenger containing at least 5 wt.%, calculated by weight of the aldehyde scavenger, of cysteine.

A second aspect of the present invention relates to a frozen confection that can be obtained by the aforementioned method.

The inventors have found that cysteine is capable of reacting with off-flavour-generating aldehydes leading to the formation of a reaction product that does not adversely affect the flavour of the frozen confection. An important example of such a reaction product is 2-pentyl-1,3-thiazolidine-4-carboxylic acid, 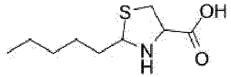 which is formed by the reaction between cysteine and hexanal.

Besides hexanal, other aldehydes that contribute to the off-flavour of plant-based frozen confections (especially 2-methylpropanal, 3-methylbutanal, 2-methylbutanal, furfural and phenylacetaldehyde) can also be scavenged by cysteine.

The scavenging reaction between cysteine and aldehydes is believed to be represented by the following reaction scheme.

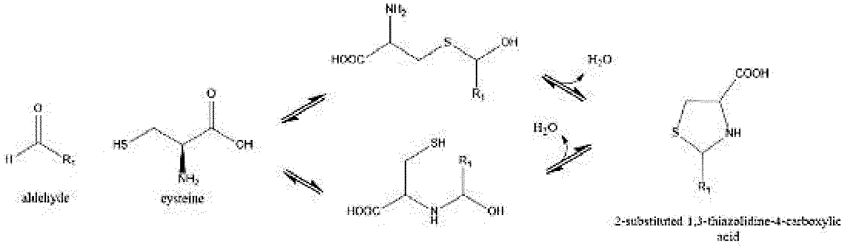

Hexanal is an aldehyde that is responsible for a significant part of the off-flavour that is caused by the presence of aldehydes in frozen confections. Indeed, the intensity of the off-flavour is strongly correlated with the hexanal content of the frozen confection. Addition of cysteine in accordance with the present invention yields a frozen confection that contains the reaction product of hexanal and cysteine, i.e., 2-pentyl-1,3-thiazolidine-4-carboxylic acid and/or salts thereof.

Accordingly, a third aspect of the present invention relates to a plant-based frozen confection comprising:
· fat in an amount of 1 to 15 wt.%,
· sugars in an amount of 10 to 30 wt.%, and
· plant protein in an amount of 0.4 to 10 wt.%;
wherein said frozen confection further comprises 2-pentyl-1,3-thiazolidine-4-carboxylic acid and/or salts thereof.

A fourth aspect of the invention relates to the use of cysteine as an off-flavour suppressor in a frozen confection containing at least 0.4 wt.% of plant protein.

### Detailed Description of the Invention

**The terms** "**a**" **and** "**an**" **an**d "**the**" **and similar referents as used herein refer to both the** singular and the plural, unless otherwise indicated herein or clearly contradicted by context.

Throughout this specification and the claims which follow, unless the context requires otherwise, the word "**comprise**" **and variations such as** "**comprises**" **or** "**comprising**" **will** be understood to imply the inclusion of a stated integer or step or group of integers or steps but not the exclusion of any other integer or step or group of integers or steps.

**Numerical ranges expressed in the format "from x to y" are understood to include x and** y.

Whenever components A and B are said to be present in a weight ratio of x:y, what is meant is that the concentration of component A in wt.% divided by the concentration of component B in wt.% equals x:y.

Concentrations expressed as a percentage by dry weight, as mentioned herein, refer to the amount of dry ingredient present in a composition as a percentage of the total amount of dry matter contained in the same composition. Here dry matter includes all matter that is contained in the composition except for water and components having a lower boiling point than water.

The amount of dry matter in a composition or an ingredient can suitably be determined by weighing such a composition or ingredient before and after water has been removed therefrom in an autoclave.

Ratios mentioned herein are based on weight/weight, unless indicated otherwise. Similarly, all percentages are percentages by weight (w/w) unless otherwise indicated.

**When multiple preferred ranges are described in the format "from x to y" for a specific** feature, it should be understood that all ranges combining the different endpoints are also contemplated.

If, for a particular component, a range of 0% to y% or less than y% is recited, said ingredient may be absent.

The term **"aldehyde scavenger"** as used herein refers to any chemical which reduces aldehyde, for example, by reaction with aldehyde.

**Whenever reference is made herein to** "**cysteine**", **unless indicated otherwise, the free** amino acid is meant. **The term "free amino acids", as known to the skilled person, refers** to amino acids that are not part of peptides or proteins. **Likewise, the term "free cysteine"** refers to cysteine that is not part of a peptide or protein.

**The term "frozen confection"** as used herein means a confection intended for consumption in the frozen state (i.e. where the temperature of the confection is less than 0°C, and preferably where the confection comprises significant amounts of ice). Definitions of various terms and techniques used in frozen confection manufacture are found in Ice Cream by H. Douglas Goff and Richard W. Hartel (2013, 7th Edition, ISBN 978-1-4614-6096-1).

The **term "plant-based"** as used herein means that the frozen confection is formulated primarily from plant-derived ingredients. Nevertheless, it will be appreciated that the plant-based frozen confection may be fortified with vitamins and/or minerals or flavoured with ingredients (such as honey) which are not strictly speaking derived from plants. Preferably at least 98% by dry weight of the ingredients are derived from plants, more preferably at least 99%, at least 99.5%, at least 99.9%, most preferably 100% by dry weight of the ingredients are derived from plants. In particular, it is preferred that the plant-based frozen confection is essentially free of animal-derived ingredients, and thus comprises animal-derived ingredients in an amount of less than 0.1 wt.%, preferably less than 0.05 wt.%, more preferably less than 0.01 wt.%.

### Method

The present invention relates to a method of producing a plant-based frozen confection with reduced off-flavour, said method comprising adding at least 0.001 wt.%, calculated by weight of the frozen confection, of an aldehyde scavenger, said aldehyde scavenger containing at least 5 wt.%, calculated by weight of the aldehyde scavenger, of cysteine.

The aldehyde scavenger that is employed in the present method preferably contains 5 to 100 wt.% of cysteine.

In one embodiment of the invention, the aldehyde scavenger employed is highly purified and contains 50 to 100 wt.% of cysteine. This type of aldehyde scavenger is preferably added in an amount of 0.001 to 1 wt.%, more preferably 0.01 to 0.5 wt.% and most preferably 0.05 to 0.2 wt.%, calculated by weight of the frozen confection.

In another embodiment, the aldehyde scavenger contains less than 50 wt.% or even less than 30 wt.% of cysteine. Protein hydrolysate is an example of such an aldehyde scavenger. In the present method, this type of aldehyde scavenger is preferably added in an amount of at least 0.01 wt.%, more preferably in an amount of 0.05 to 5 wt.%, most preferably 0.1 to 0.5 wt.%, calculated by weight of the frozen confection.

According to a particularly preferred embodiment, the aldehyde scavenger is added in an amount providing 0.001 to 0.6 wt.% of cysteine, calculated by weight of the frozen confection. More preferably, the aldehyde scavenger is added in an amount providing 0.005 to 0.4 wt.%, most preferably 0.01 to 0.2 wt.% of cysteine, calculated by weight of the frozen confection.

According to a preferred embodiment of the present method, a source of plant protein is combined with the aldehyde scavenger. The source of plant protein preferably contains, by dry weight of the source of plant protein, 40 to 90 wt.%, more preferably 65 to 88 wt.% and most preferably 70 to 86 wt.% of plant protein.

The plant protein that is present in the source of plant protein is preferably selected from pulse protein, cereal protein and combinations thereof. The pulse protein is preferably selected from bean protein, carob protein, lentil protein, lupin protein, pea protein, soy protein, and mixtures thereof. For example, the pulse protein may comprise pea protein, soy protein, fava bean protein, carob protein, or a mixture thereof. It is particularly preferred that the pulse protein comprises pea protein, soy protein, or a mixture thereof. Where the plant protein additionally comprises cereal protein, the cereal protein is preferably selected from oat protein, wheat protein, rye protein, barley protein, rice protein, buckwheat protein, millet protein, and mixtures thereof.

According to a particularly preferred embodiment, the plant protein comprises soy protein. More preferably, at least 50 wt.% of the protein in the frozen confection is soy protein. Most preferably, at least 70 wt.% of the protein in the frozen confection is soy protein.

According to another particularly preferred embodiment, the plant protein comprises pea protein. More preferably, at least 50 wt.% of the protein in the frozen confection is pea protein. Most preferably, at least 70 wt.% of the protein in the frozen confection is pea protein.

In the present method, addition of the aldehyde scavenger preferably reduces n-hexanal concentration in the frozen confection by at least 50%, more preferably by at least 60% and most preferably by at least 70%.

Preferably, the addition of the aldehyde scavenger leads to the formation of 2-pentyl-1,3-thiazolidine-4-carboxylic acid and/or salts thereof. More preferably, addition of the aldehyde scavenger increases the concentration of 2-pentyl-1,3-thiazolidine-4-carboxylic acid and/or salts thereof by at least 0.4 mg/kg, more preferably by 1 to 50 mg/kg and most preferably by 2 to 42 mg/kg.

The addition of the aldehyde scavenger preferably increases the weight ratio of 2-pentyl-1,3-thiazolidine-4-carboxylic acid and/or salts thereof: n-hexanal by at least a factor 5, more preferably at least a factor 15 and most preferably by at least a factor 50.

Addition of the aldehyde scavenger in accordance with the present invention achieves a very rapid reduction of the hexanal content. Preferably, a 50% reduction of the hexanal content of the frozen confection is observed within 3 hours, more preferably within 2 hours, even more preferably within 1 hour after addition of the aldehyde scavenger.

A frozen confection is typically made by freezing a premix (preferably a pasteurised premix) of ingredients such as water, fat, sugars, plant protein, and optionally other ingredients such as emulsifiers, stabilisers, colours and flavours. Further components (where present) are usually added after the premix has been frozen.

The premix may be manufactured in known manner, e.g. by preparing an aqueous solution from water and sequentially adding the remaining ingredients, whilst heating and agitation is applied. The premix is pasteurised. A typical pasteurization regime is a temperature of >80°C and a holding time of around 30 seconds. The premix may then be homogenised to reduce the fat droplet size. Following pasteurization or homogenization, the premix is preferably cooled, and may undergo ageing (e.g, by being held in an ageing tank at 0°C to 6°C for 1 to 24 hours, or even up to 72 hours) before being frozen. Once prepared, the premix may continue to a process for forming a frozen confection or be stored for later production.

In the present method, the aldehyde scavenger is preferably added during the preparation of a frozen confection premix. Preferably, the aldehyde scavenger is added after pasteurization, more preferably during the ageing process, of the frozen confection premix.

Preferably, the method comprises the sequential steps of:
(i) preparing a premix of ingredients comprising water, sugars, plant protein and fat;
(ii) pasteurising and optionally homogenising the premix;
(iii) adding the aldehyde scavenger to the premix of step (ii) and mixing; and
(iv) freezing and optionally aerating the premix of step (iii) to produce a plant-based frozen confection.

Preferably, the method comprises the sequential steps of:
(i) preparing a premix of ingredients comprising water, sugars, plant protein and fat;
(ii) pasteurising and optionally homogenising the premix;
(iii) adding the aldehyde scavenger to the premix of step (ii) and mixing during ageing; and
(iv) freezing and optionally aerating the premix of step (iii) to produce a plant-based frozen confection.

Another aspect of the invention relates to a plant-based frozen confection that is obtainable, more preferably that is obtained by the present method.

### Plant-based Frozen Confection

Yet another aspect of the invention relates to a plant-based frozen confection comprising:
· fat in an amount of 1 to 15 wt.%;
· sugars in an amount of 10 to 30 wt.%; and
· plant protein in an amount of 0.4 to 10 wt.%;
wherein said frozen confection further comprises 2-pentyl-1,3-thiazolidine-4-carboxylic acid and/or salts thereof.

The plant-based frozen confection of the present invention preferably contains at least 0.4 mg/kg, more preferably at least 1 mg/kg, even more preferably at least 2 mg/kg and most preferably at least 3 mg/kg of 2-pentyl-1,3-thiazolidine-4-carboxylic acid and/or salts thereof.

The plant-based frozen confection preferably contains not more than 50 mg/kg, more preferably not more than 42 mg/kg, even more preferably not more than 35 mg/kg and most preferably not more than 20 mg/kg of 2-pentyl-1,3-thiazolidine-4-carboxylic acid and/or salts thereof.

The plant-based frozen confection is preferably obtainable, more preferably obtained by the method described herein before.

Since the frozen confection is a plant-based frozen confection, it is preferred that the frozen confection is substantially free of dairy ingredients including milk protein. As used **herein "substantially free of' means that the frozen confection comprises the ingredient** in question in an amount of less than 0.1 wt.%, preferably less than 0.05 wt.%, more preferably less than 0.01 wt.%.

The n-hexanal content of the plant-based frozen confection preferably does not exceed 40 mg/kg, more preferably it does not exceed 30 mg/kg, even more preferably it does not exceed 20 mg/kg, yet more preferably it does not exceed 10 mg/kg and most preferably it does not exceed 5 mg/kg. Hexanal is typically present in the plant-based frozen confection in a concentration of at least 0.1 mg/kg.

Also the concentration levels of the aldehydes butanal, 2-methylbutanal, 3-methylbutanal, 2-methylpropanal in the plant-based frozen confection can be reduced by the present invention. The combination of butanal, 2-methylbutanal, 3-methylbutanal, 2-methylpropanal is preferably present in a concentration of not more than 50 mg/kg, more preferably of not more than 30 mg/kg, even more preferably of not more than 20 mg/kg, yet more preferably of not more than 10 mg/kg and most preferably of not more than 8 mg/kg. The aforementioned combination of aldehydes is typically present in the plant-based frozen confection in a concentration of at least 1 mg/kg.

The aldehyde concentrations in frozen confections may suitably be determined by means known in the art. Preferably, the aldehyde concentration in the frozen confection is determined by headspace GC-MS (gas chromatography-mass spectrometry) using spiking with known amounts of these same aldehydes.

The plant-based frozen confection comprises fat in an amount of 1 to 15 wt.%, more preferably in an amount of 2 wt.% to 12 wt.%, 3 wt.% to 10 wt.%, or even from 4 wt.% to 8 wt.%. The fat is preferably milk fat or vegetable fat (such as coconut oil, palm oil, palm kernel oil, or a mixture thereof), and it is particularly preferred that the fat is coconut oil.

The plant-based frozen confection comprises sugars in an amount of 10 to 30 wt.%. Sugars are used in almost all types of frozen confection and have two major functions: delivering sweetness and controlling the amount of ice. **As used herein the term "sugars"** includes monosaccharides, disaccharides and oligosaccharides (which are formed from 3 to 10 monosaccharide units). Monosaccharides include glucose, fructose, galactose and mannose. Disaccharides include sucrose, lactose and trehalose. Oligosaccharides **include raffinose. The term "sugars" does not include polysaccharides, which** comprise >10 monosaccharides. Some ingredients commonly included in frozen confections may contribute to the amount of sugars. An example is corn syrup (sometimes called glucose syrup) - which is a mixture of monosaccharides, disaccharides and oligosaccharides.

High concentrations of sugars may contribute unwanted sweetness and or calories to the frozen confection. Therefore, the amount of sugars in the frozen confection is no more than 30 wt.%, preferably no more than 28 wt.%, no more than 26 wt.%, or no more than 24 wt.%. Conversely, low concentrations of sugars may be inappropriate if the frozen confection is a scoopable product, since a low concentration of sugars tend to result in frozen confections with a high ice content. Therefore, the amount of sugars in the frozen confection premix or frozen confection is at least 10 wt.%, preferably at least 12 wt.%, at least 14 wt.%, or at least 16 wt.%.

The plant-based frozen confection comprises plant protein in an amount of 0.4 to 10 wt.%, and more preferably in an amount of 0.5 to 6 wt.%, 0.55 to 5 wt.%, 0.6 to 4 wt.%. It is particularly preferred that the frozen confection premix or frozen confection comprises the plant protein in an amount of from 0.6 to 2.5 wt.%, or even 0.6 wt.% to 2 wt.%.

The plant protein is preferably selected from pulse protein, cereal protein and combinations thereof. The pulse protein is preferably selected from bean protein, carob protein, lentil protein, lupin protein, pea protein, soy protein, and mixtures thereof. For example, the pulse protein may comprise pea protein, soy protein, fava bean protein, carob protein, or a mixture thereof. It is particularly preferred that the pulse protein comprises pea protein, soy protein, or a mixture thereof. Where the plant protein additionally comprises cereal protein, the cereal protein is preferably selected from oat protein, wheat protein, rye protein, barley protein, rice protein, buckwheat protein, millet protein, and mixtures thereof.

The plant-based frozen confection may additionally comprise at least one stabilizer, which is preferably selected from the group consisting of locust bean gum, xanthan gum, guar gum, carrageenan, tara gum, and mixtures thereof (for example, a mixture of locust bean gum and guar gum). The amount of stabilizer in the frozen confection is preferably 0.1 wt.% to 1 wt.%, 0.15 wt.% to 0.8 wt.%, or 0.2 wt.% to 0.5 wt.%.

The plant-based frozen confection may additionally comprise an emulsifier or a mixture of emulsifiers (such as mono-diglycerides and the like). For example, the frozen confection may comprise emulsifier in an amount of 0.05 wt.% to 1 wt.%, 0.1 wt.% to 0.8 wt.%, or 0.2 wt.% to 0.5 wt.%.

The plant-based frozen confection may optionally comprise non-nutritive sweetener, such as aspartame, acesulfame K, erythritol, sucralose, or one or more steviol glycosides such as rebaudioside A. Mixtures of two or more non-nutritive sweeteners may also be used.

The plant-based frozen confection may optionally comprise colours and/or flavours.

The plant-based frozen confection may optionally comprise further components, which include but are not limited to: inclusions, sauces, and/or toppings.

The plant-based frozen confection is preferably aerated. As used herein the term **"aerated" means that the confection has an overrun of at least 30%. Preferably the frozen** confection has an overrun of 50% to 150%, 70% to 140%, or even 80% to 120%. **Overrun (with unit "%") is defined by the following equation:** $overrun = \frac{volume of aerated product - volume of initial mix}{Volume of initial mix} \times 100 %$

Overrun is measured at ambient temperature (20°C) and atmospheric pressure.

### Use

A further aspect of the invention relates to the use of cysteine as an off-flavour suppressor in a frozen confection comprising at least 0.4 wt.% of plant protein.

The frozen confection in which cysteine is applied preferably contains 1 to10 wt.%, more preferably 2 to 8 wt.% of plant protein.

The plant protein is preferably selected from pulse protein, cereal protein and combinations thereof. The pulse protein is preferably selected from bean protein, carob protein, lentil protein, lupin protein, pea protein, soy protein, and mixtures thereof. For example, the pulse protein may comprise pea protein, soy protein, fava bean protein, carob protein, or a mixture thereof. It is particularly preferred that the pulse protein comprises pea protein, soy protein, or a mixture thereof. Where the plant protein additionally comprises cereal protein, the cereal protein is preferably selected from oat protein, wheat protein, rye protein, barley protein, rice protein, buckwheat protein, millet protein, and mixtures thereof.

According to a particularly preferred embodiment, the plant protein comprises soy protein. More preferably, at least 50 wt.% of the protein in the frozen confection is soy protein. Most preferably, at least 70 wt.% of the protein in the frozen confection is soy protein.

According to another particularly preferred embodiment, the plant protein comprises pea protein. More preferably, at least 50 wt.% of the protein in the frozen confection is pea protein. Most preferably, at least 70 wt.% of the protein in the frozen confection is pea protein.

Preferably, cysteine is applied in the frozen confection in an amount of 0.001 to 0.6 wt.% by weight of the frozen confection. More preferably, cysteine is applied in the frozen confection in an amount of 0.005 to 0.8 wt.%, most preferably 0.01 to 0.6 wt.%, by weight of the frozen confection.

The invention is further illustrated by the following non-limiting examples.

### Examples

The examples are intended to illustrate the invention and are not intended to limit the invention to those examples *per se.*

### Example 1

This example demonstrates that addition of cysteine in a plant-based frozen confection could reduce the hexanal concentration of the frozen confection.

### Method

The formulation of a plant-based frozen confection premix used to prepare samples A, 1 and 2 is shown in Table 1. The pea protein was Pisane C9 pea protein (Cosucra, 85% protein content). The processing conditions used to prepare these samples are described below.

**Table 1**

| **Ingredient** | **Amount (wt.%)** |
|---|---|
| Coconut Oil | 7.00 |
| Pea Protein | 1.20 |
| Fructose | 1.70 |
| Glucose Syrup 28DE | 9.20 |
| Glucose-fructose Syrup 63DE (78% solids) | 10.00 |
| Sucrose | 10.40 |
| Beta Carotene | 0.04 |
| Emulsifier | 0.10 |
| Stabilizers | 0.30 |
| Salt (NaCl) | 0.10 |
| Water | To 100 |

The above ingredients were added into water at a temperature of around 70°C together with mild stirring to form a homogeneous premix. The premix was pasteurised at 82°C for 25 seconds and homogenized at 150 bar.

The obtained premix was then kept in a refrigerator at 4°C and aged for one hour. During ageing, for Sample A, no cysteine hydrochloride monohydrate was added to the obtained premix; for Samples 1 and 2, a weighed amount of cysteine hydrochloride monohydrate was added to the obtained premix and mixed until completely dissolved.

Vanilla flavour (0.15 wt.%) was then added to each sample. Sample was then treated by standard simultaneous freezing and aeration in a Frigomat G10 batch freezer until the measured overrun was over 80%. The obtained frozen confection sample was kept in a blast freezer for two hours and then subsequently stored at -25°C.

Next, 1.0 g of each sample was put in a 20 mL headspace vial in 3 replicates. Samples were kept for 3 hours at room temperature. Then, all samples were analysed by GC-MS.

The GC-MS analyses were performed on an Agilent 7890A GC-MS system (Agilent, Amstelveen, the Netherlands) equipped with a Gerstel MPS-XL autosampler (Gerstel, Mülheim a/d Ruhr, Germany) capable of head-space injections and containing a heated 2.5 mL head-space syringe. Injection was performed in the split mode with a split ratio of 25:1. The quartz liner of the injector had an internal diameter of 2 mm. Injector temperature was 200°C. The injection volume was 750 µL, both for the samples as well as for the calibration standards.

The gaseous head-space samples were injected at a rate of 1000 µL/s. The syringe temperature was kept at 50°C. Carrier gas was helium at a constant flow of 2.0 mL/min. The column was a short capillary column with an inner diameter of 150 µm, and a length of 6 m (Agilent, Middelburg, the Netherlands). It was coated with 0.3 mm of a VF-5ms stationary phase. The oven temperature program started at 45°C (0 min) and was programmed to 80°C (0 min) at 80°C/min followed by a ramp of 100°C/min to 120°C (0.16 min). To allow the system to achieve these high heating rates reproducibly, the oven was equipped with a high-speed oven-insert pillow (Agilent). MS acquisition was performed in the SIM mode, monitoring the ions m/z 56, m/z 72, and m/z 82. Ion 56 was used as quantifier ion, the other two as qualifiers.

Quantification was performed against a calibration line consisting of hexanal spiked into purified, hexanal-**free sunflower oil at 6 levels ranging from 24 to 395 ppm.** The purified **oil was prepared by steam stripping 10 kg of sunflower oil in a pilot plant steam stripper for 3 h with 0.1 kg steam/h at 220°C and 3 mbar.** The hexanal level in the purified oil was below the detection limit of the GC-MS SIM method here developed. Because the automated Combipal agitator could not easily be operated at room temperature, the **calibration standards were equilibrated (2 min) and measured at 30°C.** Since the large bottles containing the aged samples could not be put in the agitator oven, these were measured at 21°C. Peak areas were converted to concentrations using the calibration line applying a correction factor to correct for the temperature difference between samples and calibration standards. This correction factor was calculated from the slope of a calibration line recorded at 30°C versus one recorded at 21°C. The slope ratio was 1.53. The control sample of sunflower oil spiked with hexanal concentration of 2 mg/g was used as a calibration standard to check if the GC-MS was performed according to the protocol.

This method is described in publication by Janssen et al. (A Fast GC-MS-Based Method for Efficacy Assessment of Natural Anti-Oxidants for Inhibiting Lipid Oxidation, Journal of AOAC INTERNATIONAL Vol. 104, No. 2, 2021), the contents of which are incorporated herein by way of reference.

The hexanal levels determined in this manner are shown in Table 2.

**Table 2**

| **Sample** | **A** | **1** | **2** |
|---|---|---|---|
| Cysteine (mg/kg) | 0.00 | 0.03 | 0.06 |
| Overrun (%) | 83 | 84 | 83 |
| Hexanal Start¹ (mg/kg) | 3.06 | 2.99 | 2.90 |
| Hexanal Final² (mg/kg) | 3.46 | 0.88 | 0.48 |

| | | | |
|---|---|---|---|
| 1. Hexanal start refers to the concentration of hexanal in the premix before addition of cysteine. 2. Hexanal final refers to the concentration of hexanal in the final frozen confection sample. | | | |

As shown in Table 2, samples 1 and 2 in accordance with the present invention demonstrated a significant reduction (maximum 80%) in hexanal concentration upon cysteine treatment. In contrast, the hexanal concentration of sample A without cysteine treatment remained at around 3 mg/kg. It is demonstrated that addition of cysteine in a plant-based frozen confection could reduce the hexanal concentration of the frozen confection.

### Example 2

This example demonstrates that addition of cysteine could reduce the off-flavour in a plant-based frozen confection.

### Method

Sensory assessment of samples from Example 1 was done immediately after micro clearance.

Samples were placed on a plate with a randomized code unknown to the tasters what the code represented. The panel consisted of internally trained scientists (n=9) that blindly scored the samples on flavour intensity (the level of overall flavour regardless of orientation), vanilla flavour (the overall level of vanilla such as bourbon, caramelic and so on), sweet taste (basic taste), plant-based off-notes (basic taste), and aftertaste (the level of flavour after swallowing until 10 seconds) on a scale of 1 to 7.

The results of the assessment (average scores) are summarised in Table 3

**Table 3**

| **Sample** | **A** | **1** | **2** |
|---|---|---|---|
| Flavour Intensity | 4.0 | 5.1 | 5.0 |
| Vanilla Flavour | 4.0 | 3.1 | 2.9 |
| Sweet Taste | 4.0 | 4.3 | 4.1 |
| Plant-based Off-notes | 4.0 | 2.8 | 2.7 |
| Aftertaste | 4.0 | 5.2 | 4.9 |

As shown in Table 3, the off-notes of samples 1 and 2 in accordance with the present invention significantly reduced as compared to sample A without the addition of cysteine. It is demonstrated that the addition of cysteine could reduce off-flavour in a plant-based frozen confection.

### Example 3

This example demonstrates the concentration of PTCA in a plant-based frozen confection with cysteine addition.

### Sample Preparation

Concentration of PTCA in samples A, 1 and 2 from Example 1 were analysed. Samples were refrigerated for 1 hour before preparation. For each sample, a precisely weighted amount (993 to 1,071 mg) of sample was placed into separate 50 mL Falcon Tubes. Then, 10 mL of extraction solvent (1:1 mixture of ultrapure methanol and Millipore water) was added. The sample tubes were sealed and vigorously shaken by hand. They were then mixed with a vortex mixer for 30 seconds. Subsequently, the sample tubes were immersed in an ultrasonic bath for a total duration of 30 minutes. Every 10 minutes, the sample tubes were additionally shaken by hand. After removing the sample tubes from the ultrasonic bath, they were allowed to settle for 30 minutes in the refrigerator.

The sample solutions were transferred into Eppendorf tubes for centrifugation (10 minutes at 3000 xG). The supernatant was pipetted into individual HPLC vials and were used for analysis by liquid chromatography coupled to high resolution mass spectrometry (LC-MS).

### Standard Preparation

A solution of isotopically labelled hexanal D12 (hydrogens were exchanged for deuterium) dissolved in ethanol with a concentration of 6,676 ppm (MW of hexanal D12 is 112 g/mol, so concentration = 59.6 mM) was prepared.

A solution of 1% cysteine.HCL.H₂O was freshly prepared in water (MW of cysteine is 175.65 g/mol, so concentration = 57.1 mM).

An isotopically labelled 2-pentylthiazolidine-4-carboxylic acid standard was prepared by reaction of equimolar amounts of cysteine and hexanal-D12 as follows: 55 µl of cysteine.HCL.H₂O 1% solution was pipetted into a 1.5 ml analytical vial. To this vial 36 µl Hexanal-D12 solution was added and 909 µl of water:methanol (volume ratio 1/1). This resulted into a deuterium labelled 2-pentylthiazolidine(D12)-4-carboxylic acid standard with a concentration of approximately 2.14 mM. (57.1 mM * 55/(55+36+909)= 2.14 mM). The stock solution was 10-fold diluted with water: methanol (volume ratio 1/1) and was used for spiking. For spiking, 20 µl of 2.1mM internal standard was added to 980 µl sample solution.

### LC-MS Measurement

All LC-MS analyses were performed using an UltiMate 3000 RS liquid chromatograph connected to a Q-Exactive Plus Hybrid Quadrupole-Orbitrap mass spectrometer (Thermo Fischer Scientific, Waltham MA, USA). A BEH C18 column (2.1 mm x 100 mm, 1.7 µm; Waters, Etten-Leur, The Netherlands) with associated VanGuard pre-column was used for the separations.

The analytes were eluted at a flow rate of 0.30 ml/min using a linear gradient of water (solvent A) and acetonitrile (solvent B) both fortified with 0.1% formic acid. The gradient was programmed as followed: 1 min at 0.1% B, in 11.5 min to 40% B, in 2.5 min to 100% B, 2.5 min at 100% B, in 0.1 min back to 0.1% B and finally re-equilibration for 4.4 min at 0.1% B. The total run time was 22 minutes. The column temperature was 40 °C, the temperature of the autosampler was 5 °C, and the injection volume was 2 µL.

The electrospray ion source was operated in alternating positive and negative mode with the following parameters: the capillary temperature was 320°C, the heater temperature was 350°C, the sheath gas was set to 50 arbitrary units, the auxiliary gas was set to 13 arbitrary units. The mass spectrometer was operated in full-scan MS mode. The capillary voltage was set to 3.3 kV with a S-lens RF level of 50. Calibration was achieved using Pierce Positive and Negative Ion Calibration Solution (Thermo Fischer). Data acquisition was carried out using Xcalibur 3.1.

Full scan spectra were acquired at a resolution of 35.000 in the m/z range 100-1500 using a maximum ion injection time of 100 ms. For identification the instrument was operated in data dependent MS2 mode. From the top 10 most abundant ions ddMS2 scans were acquired at a resolution of 17.500 with an isolation window of 2 m/z whilst having the dynamic exclusion list set to 10 seconds. The maximum injection time was set to 50 ms and a normalized stepped collision energy was applied of 15, 30 and 60 arbitrary units.

### Quantification of 2-Pentylthiazolidine-4-Carboxylic Acid (PTCA)

All samples were extracted, and the aliquots were analysed in duplicate by LC-MS using a standard LC-MS profiling method.

The MS peak area of PTCA was determined by integration of the peak at retention time 9.1 minutes of the extracted ion chromatogram of m/z 204.1051 with a mass error of 10 ppm.

A reference sample and samples formulated with 0.03% and 0.06% cysteine were all spiked with a known concentration of deuterium labelled PTCA-D12 (prepared according to procedure described above). The peak area ratio between PTCA and PTCA-D12 was used for quantification. Concentrations of PTCA in the other samples were calculated relative to the determined concentration in the spiked sample. The determined concentration levels are shown in Table 4, all calculations are described below.

### Calculations of the PTCA Concentration in Ice Cream Samples

· Concentration in sample solution was calculated as followed:
   Measured concentration in sample = concentration standard * (peak area sample / peak area labelled standard)
Total mass PTCA in sample material:$Total mass = measured concentration * volumein liters * dilution factor$
· Concentration in ppm = total mass (µg) / sample weight (g)

### Results

The concentration of PTCA (2-pentyl-1,3-thiazolidine-4-carboxylic acid) was determined according to method described above. The results are shown in Table 4.

**Table 4**

| **Sample** | **Added Cysteine (wt.%)** | **PTCA (ppm)** |
|---|---|---|
| A | 0.00 | 0.05 |
| 1 | 0.03 | 4.43 |
| 2 | 0.06 | 4.47 |

| | | |
|---|---|---|
| *n=3* | | |

The final concentration levels of PTCA in samples 1 and 2 with addition of cysteine in accordance with the present invention were between 4.0 and 4.5 ppm. The level of PTCA in sample A without cysteine addition was below 0.1 ppm.

## Claims

1. A plant-based frozen confection comprising:
fat in an amount of 1 to 15 wt.%;
sugars in an amount of 10 to 30 wt.%; and
plant protein in an amount of 0.4 to 10 wt.%;
wherein said frozen confection further comprises 2-pentyl-1,3-thiazolidine-4-carboxylic acid and/or salts thereof.

2. The plant-based frozen confection according to claim 1, wherein the frozen confection contains at least 0.4 mg/kg of 2-pentyl-1,3-thiazolidine-4-carboxylic acid and/or salts thereof.

3. The plant-based frozen confection according to claim 1 or 2, wherein the frozen confection contains not more than 50 mg/kg of 2-pentyl-1,3-thiazolidine-4-carboxylic acid and/or salts thereof.

4. The plant-based frozen confection according to any one of the preceding claims, wherein n-hexanal is present in a concentration of not more than 40 mg/kg.

5. The plant-based frozen confection according to any one of the preceding claims, wherein the plant protein is selected from pulse protein, cereal protein and combinations thereof.

6. A method of producing a plant-based frozen confection with reduced off-flavour, comprising adding at least 0.001 wt.%, calculated by weight of the frozen confection, of an aldehyde scavenger, said aldehyde scavenger containing at least 5 wt.%, calculated by weight of the aldehyde scavenger of cysteine.

7. The method according to claim 6, wherein the method comprises the sequential steps of:
i) preparing a premix of ingredients comprising water, sugars, plant protein and fat;
ii) pasteurising and optionally homogenising the premix;
iii) adding the aldehyde scavenger to the premix of step (ii) and mixing; and
iv) freezing and optionally aerating the premix of step (iii) to produce a plant-based frozen confection.

8. The method according to claim 6 or 7, wherein the aldehyde scavenger contains at least 50 wt.% of cysteine.

9. The method according to any one of the preceding claims 6 to 8, wherein the aldehyde scavenger is added in an amount providing 0.001 to 0.6 wt.% of cysteine, calculated by weight of the frozen confection.

10. The method according to any one of the preceding claims 6 to 9, wherein the method comprises combining a source of plant protein with the aldehyde scavenger.

11. The method according to claim 10, wherein the source of plant protein contains, by dry weight of the source of plant protein, 40 to 90 wt.% of plant protein.

12. The method according to any one of the preceding claims 6 to 11, wherein the method produces a plant-based frozen confection according to any one of the preceding 1 to 5.

13. Use of cysteine as an off-flavour suppressor in a frozen confection comprising at least 0.4 wt.% of plant protein.
